# EUROPEAN PATENT SPECIFICATION

(11) **EP 4 478 904 B1**
(45) Date of publication and mention of the grant of the patent: **10.12.2025**
(21) Application number: 23704884.8
(22) Date of filing: 02.02.2023
(51) Int. Cl.: A41D 1/08, A41D 31/24, A41D 17/02, A41D 13/05, B32B 5/00

(54) **MULTI-LAYER CHAINSAW PROTECTION GARMENT**
MEHRSCHICHTIGE KETTENSÄGENSCHUTZBEKLEIDUNG
VÊTEMENT DE PROTECTION MULTICOUCHE POUR TRONÇONNEUSE

(30) Priority: 17.02.2022 SE 2250163
(43) Date of publication of application: 25.12.2024
(73) Proprietor: Husqvarna AB, 561 82 Huskvarna (SE)
(72) Inventor: MILLING, Johan, 791 60 Falun (SE)
(86) International application number: PCT/EP2023/052567
(87) International publication number: WO 2023/156211

(56) References cited:
- WO-A1-2018/211294
- WO-A1-98/33406
- JP-A- 2004 244 741

## Description

### TECHNICAL FIELD

Example embodiments generally relate to personal protective equipment (PPE) and, more particularly, relate to personal protective garments that provide chainsaw protection.

### BACKGROUND

Chainsaw protective garments are used today to protect a user from injury or serious injury due to accidental contact with a moving cutting chain of a chainsaw. To do so, many protective garments include pull-out fibers that are pulled from the protective garment when contact is made between the chain and the garment. The fibers are pulled into the mechanism of the chainsaw where they clog into a chain drive channel and prevent further rotation of the drive axel and chain. JP2004244741 A shows an example of such a garment.

While such garments are have proven useful when a user of a chainsaw is operating on the ground, i.e., to fell a tree and then limb the fallen tree, the situation changes when a chainsaw user operates while off the ground to perform tree limb trimming and thinning. Such trimming and thinning may be performed by an arborist or tree surgeon in an effort to maintain the long-term health of the tree. To perform such trimming and thinning at high heights, the arborist may be required to climb the tree. The equipment used to climb the tree typically involves a climbing harness and tree climbing spurs. The climbing harness is typically tightly secured around the waist and legs of the arborist and is connected to safety rope or line that is secured to tree above the arborist to prevent a fall from the tree. Additionally, the climbing spurs are typically coupled to the arborist's boots and are tightly strapped around each leg of the arborist often at a calf location.

As such, the straps of the climbing harness and the climbing spurs can compress the protective garment and place the material of the garment under tension in the locations where the straps are located. This tension may have an effect on the pull-out fibers and their ability to pull out of the garment when a contact event with the chainsaw occurs. As such, there is a need for protective garments that provide for sufficient pull-out of fibers when contact is made with a moving chainsaw even when straps of, for example, a climbing harness or climbing spurs are applied.

### BRIEF SUMMARY OF SOME EXAMPLES

According to the invention, a protective garment according to claim 1 for use with a chainsaw is provided.

According to some example embodiments, a front panel of a protective garment for use with a chainsaw is provided. The front panel may be a component of a garment that can be under compression by straps of a climbing harness or climbing spurs. The front panel may comprise a plurality of inner protective material layers and a plurality of outer protective material layers. Each inner protective material layer may have first pull-out fibers configured to pull out when contacted by a moving chainsaw. The first pull-out fibers may be weaved into each of the inner protective material layers with a first fiber density. Each outer protective material layer may have second pull-out fibers configured to pull out when contacted by a moving chainsaw. The second pull-out fibers are weaved into each of the outer protective material layers with a second fiber density. The second fiber density may be greater than the first fiber density. The plurality of inner protective material layers may be disposed closer to a user's skin when the protective garment is being worn than the plurality of outer protective material layers.

According to embodiments, each of said inner protective material layers may have a first surface density, and each of said outer protective material layers may have a second surface density which is higher than the first surface density.

According to embodiments, each of said inner protective material layers may have a respective first thread count, and each of said outer protective material layers may have a respective second thread count which is higher than the first thread counts of the inner protective material layers. For example, the first thread count of each respective inner protective material layer may be a weft count, and similarly, the second thread of each respective outer protective material layer may also be a weft count. Typically, thread count may be measured in threads/cm. According to some embodiments, all of said inner protective materials may have the same fiber density, surface density and thread count. Similarly, all of said outer protective materials may have the same fiber density, surface density and thread count. Typically, in order to keep the weight of the protective garment low, each of the first and/or second material layers is non-metallic.

### BRIEF DESCRIPTION OF THE SEVERAL VIEWS OF THE DRAWING(S)

Having thus described some example embodiments in general terms, reference will now be made to the accompanying drawings, which are not necessarily drawn to scale, and wherein:
FIG. 1 illustrates front view of protective pants according to some example embodiments;
FIG. 2A illustrates a protective layer assembly according to some example embodiments;
FIG. 2B illustrates another protective layer assembly according to some example embodiments;
FIG. 3 illustrates a stitched protective layer assembly according to some example embodiments;
FIG. 4A illustrates front view of protective pants according to some example embodiments;
FIG. 4B illustrates back view of the protective pants of FIG. 4A according to some example embodiments;
FIG. 5 illustrates front view of another protective pants according to some example embodiments;
FIG. 6A illustrates front view of protective chaps according to some example embodiments; and
FIG. 6B illustrates back view of the protective chaps of FIG. 6A according to some example embodiments.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

According to various example embodiments, protective garments and panels of protective garments are provided herein that can be used for chainsaw protection. Additionally, according to some example embodiments, the protective garments may provide chainsaw protection when portions of the garment are under compression, for example, from tightened straps of a climbing harness, climbing spurs, or the like. In this regard, a protective garment, according to some example embodiments, may be constructed of layers of protective material, which may be a fabric that comprises pull-out fibers. The pull-out fibers may be pulled from the fabric due to contact with the cutting links of the chainsaw and the pull-out fibers may, for example, wrap around the drive axle to prevent rotation of the axle and the chain. To compensate for an effect of compression from straps applied to the protective garment, a specific assembly of protective material layers with differing densities may be utilized to construct the garment as described herein.

In this regard, according to some example embodiments, a protective garment or a panel of a protective garment may comprise a plurality of inner protective material layers and a plurality of outer protective material layers. Each inner protective material layer may have first pull-out fibers configured to pull out when contacted by a moving chainsaw. The first pull-out fibers may be weaved into each of the inner protective material layers with a first fiber density. Each outer protective material layer may have second pull-out fibers configured to pull out when contacted by a moving chainsaw. The second pull-out fibers may be weaved into each of the outer protective material layers with a second fiber density. The second fiber density for the outer protective material layers is greater than the first fiber density for the inner protective material layers. The first and/or second pull-out fibers may be weaved into the respective inner and/or outer protective material layers to extend along parallel, substantially straight lines: thereby, pull-out of fibers may be facilitated. The first and/or second pull-out fibers are configured as multi-filament threads, which may be unspun yarns or rovings, weaved into the respective inner and/or outer protective material layers. By configuring the first and/or second pull-out fibers as unspun yarns or rovings, their efficiency in stopping a saw chain is maximized. According to embodiments, the unspun yarns or rovings of pull-out fibers may be more open, i.e. looser and "fluffier", in the outer protective material layers than in the inner protective material layers. Thereby, the saw chain will be more prone to immediately entangle in the pull-out fibers when contacting the outer protective material layers. Each thread, i.e. yarn or roving, of pull-out fibers may comprise, for example, between 500 and 3000 fibers. Typically, in order to keep the weight of the protective garment low, each of the first and/or second material layers is non-metallic.

Chainsaw protective garments, such as pants, in the EU must comply with EN ISO 11393-2:2019 and are classified in three classes and three types, depending on the quantity and arrangement of the filler material. Class 1, 2 and 3 trousers are rated for use with chainsaws running at speeds up to 20 meters/second (m/s), 24 m/s and 28 m/s respectively.

Apart from the standard having three protective classes (1,2,3) the standard also has three design classes A, B and C, where design class C protects the whole legs. Tree fellers, ground workers and firewood cutters typically select design class A trousers because of the low risk of being cut in the back of the leg. Climbers and tree surgeons generally have the chainsaw attached by a lanyard to their climbing harness and select design class C, as they will be cutting from a wider variety of positions. In design class A and B pants, the protective material is arranged to cover principally the front of the legs, whereas type C trousers provide protective material that extends around the front and back so as to enclose each leg. In each type, the protective material extends upwardly from the crotch for some distance on each side, while the seat (the region behind the wearer between the waist and the legs) may, but need not include protective material. Some users, like occasional or non-professional users, prefer chaps, which may be two separate leg coverings (or attached to one another), usually lacking a seat and united by a waistband or the like and providing design class A protection, and which are worn over conventional pants.

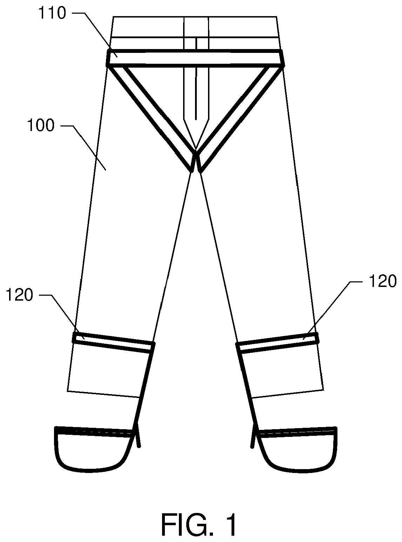

An example embodiment of protective pants 100 (also referred to as trousers) is shown in FIG. 1. The protective pants 100 may be formed of a number of layers of protective material as further described herein. As shown in FIG. 1, an individual may wear the protective pants 100 with a climbing harness 110 and climbing spurs 120. As can be seen in FIG. 1, the climbing harness 110 and the climbing spurs 120 may include respective straps that may be applied to the exterior of the protective pants 100, when a user is wearing these items. As can be seen, the climbing harness 110 may include straps that compress the protective pants 100 across the waist and extend from the crotch of the protective pants 100. In some instances, tools may be secured to the climbing harness 110 (such as the chainsaw itself, handsaws, clippers, etc.) that may add to the compression forces applied at the straps. Additionally, the climbing spurs 120 may include straps that compress the legs of the protective pants 100 near the calf.

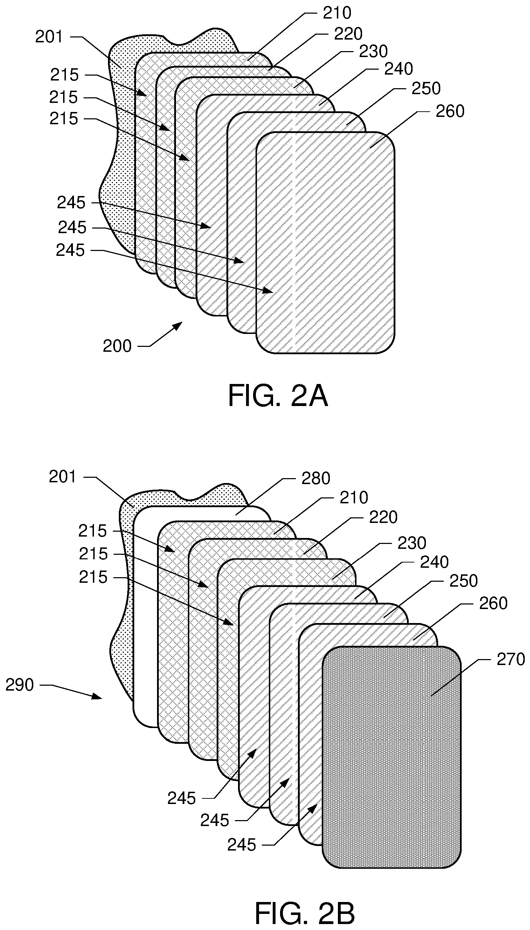

Referring now to FIG. 2A, an exploded view of a protective layer assembly 200 is shown that may be used in the construction of a protective garment. The protective layer assembly 200 is shown in relation to a user's skin 201, when the protective garment is worn, to provide context to the location of the layers relative to the user's skin 201. In this regard, the protective layer assembly 200 may comprise a plurality of protective material layers. These protective material layers may comprise pull-out fibers as described herein that readily pull out of the fabric when contact is made with a moving chainsaw. According to some example embodiments, these protective material layers may comprise, for example, warp knitted synthetic fabrics that are elastically stretchable as well as water repellent.

Further, according to some example embodiments, the plurality of protective material layers may comprise a plurality of inner protective material layers and a plurality of outer protective material layers. The protective layer assembly 200 may comprise three inner protective material layers 210, 220, and 230. Additionally, the protective layer assembly 200 may comprise three outer protective material layers 240, 250, and 260. The inner protective material layers 210, 220, and 230 may be disposed closer to a user's skin 201 than the outer protective material layers 240, 250, and 260 when the protective garment comprising the protective layer assembly 200 is being worn. As such, each layer may be stacked on an adjacent layer. According to some example embodiments, outer protective material layer 240 may be disposed in direct contact with inner layer 230. Accordingly, the protective material layers 210, 220, 230, 240, 250, and 260 may be stacked, one on the other, in the indicated order shown in FIG. 2A.

In general, according to some example embodiments, the outer protective material layers 240, 250, and 260 may be comprised of more cut resistant material (relative to the inner protective material layers 210, 220, and 230) in order to slow the chain of the chainsaw down more rapidly. Further, the outer protective material layers 240, 250, and 260 may comprise pull-out fibers 245. In this regard, the increased cut resistance may be due to a density of the pull-out fibers 245 in the outer protective material layers 240, 250, and 260 being greater than a density of the pull-out fibers 215 of inner protective material layers 210, 220, and 230. As such, the outer protective material layers 240, 250, and 260 are more dense, can weigh more, and have less breathability than the inner protective material layers 210, 220, and 230. The higher density of the outer protective material layers 240, 250, and 260 may reduce a risk that the protective garment is cut off, rather than the pull-out fibers being pulled out. Additionally, the inner protective material layers 210, 220, and 230 are less dense, can weigh less, and have higher breathability. Such a combination of the outer protective material layers 240, 250, and 260 and the inner protective material layers 210, 220, and 230, with the characteristics describe above, allows for increased protection in the event of strap compression due to the presence of the outer protective material layers 240, 250, and 260, but still be relatively lightweight and breathable due to the presence of the inner protective material layers 210, 220, and 230. Accordingly, a high-protection, but still lightweight and thin protective garment solution can be realized that, for example, meets the appropriate standards referenced herein.

According to some example embodiments, each of the inner protective material layers 210, 220, and 230 may be formed and constructed in the same manner, i.e., comprising pull-out fibers 215. As such, the inner layer 210 will be described as an example of an inner protective material layer. The inner layer 210 may be formed of a fabric comprising fibers including pull-out fibers 215, and the fibers may be formed of polyester (e.g., polyethylene terephthalate (PET)) and ultra-high-molecular-weight polyethylene (UHMWPE). Having an ultra-high molecular weight may include polyethylene having a molecular weight between 2 million and 8 million atomic mass units (amu). According to some example embodiments, the inner layer 210 may be formed of 54% PET and 46% UHMWPE. According to some example embodiments, other materials that may be used to form the pull-out fibers 215 may include para-aramid (e.g. Kevlar^{®}), ballistic nylon, high performance filament yarn made of PET (Poly Ethylene terephtalat), PP (PolyPropylene) or PE (Poly Ethylene), PA (Poly Amide) (for example materials such as Dyneema^{®} or Vectran^{®}, etc.) which may be loosely arranged within the fabric of the inner layer 210. The inner layer 210 may have a unit weight of about 95 ± 5 grams per meter squared (g/m²). Further, a warp knit construction may be used to generate the inner layer 210. The warp threads per centimeter (threads/cm), on average for the inner layer 210, may be 4.4 threads/cm and the weft threads per centimeter, on average, may be 3.0 threads/cm. According to some example embodiments, a warp range may be about 4 to 5 threads/cm and a weft range may be about 3 to 4 threads/cm. The warp of the warp-knit fabric extends, by analogy to woven fabric, in the direction of the selvage; thereby, the warp count, i.e. the number of warp threads/cm, is measured in weft direction, i.e. perpendicular to the warp direction. Similarly, the weft count, i.e. the number of weft threads/cm, is measured along the warp direction.

As mentioned above, each of the inner protective material layers may have the same construction and characteristics as the inner layer 210. As such, the protective layer assembly 200 may comprise any number of inner layers having the construction and characteristics of the inner layer 210. However, according to some example embodiments, three inner layers may be used as provided in the protective layer assembly 200.

According to some example embodiments, each of the outer protective material layers 240, 250, and 260 may be formed and constructed in the same manner, i.e., with pull-out fibers 245. As such, the outer layer 240 will be described as an example of an outer protective material layer. The outer layer 240 may be formed of a fabric comprising fibers including pull-out fibers 245, and the pull-out fibers 245 may be formed of polyester (e.g., PET). According to some example embodiments, the pull-out fibers 245 may also comprise polyethen or UHMWPE. According to some example embodiments, other materials that may be used to form the pull-out fibers may include para-aramid (e.g. Kevlar^{®}), ballistic nylon, high performance filament yarn made of PET (Poly Ethylene terephtalat), PP (PolyPropylene) or PE (Poly Ethylene), PA (Poly Amide) (for example materials such as Dyneema^{®} or Vectran^{®}, etc.) which may be loosely arranged within the fabric of the outer layer 240. The outer layer 240 may have a unit weight of about 130 ± 5 grams per meter squared (g/m²). Further, a warp knitted construction may be used to generate the outer layer 240. The warp threads/cm, on average for the outer layer 240, may be 4.3 ± 0.4 threads/cm and the weft threads per centimeter, on average, may be 7.3 ± 0.4 threads/cm. According to some example embodiments, a warp range may be about 4 to 5 threads/cm and a weft range may be about 7 to 8 threads/cm.

As mentioned above, each of the outer protective material layers may have the same construction and characteristics as the outer layer 240. As such, the protective layer assembly 200 may comprise any number of outer layers having the same construction and characteristics of the outer layer 240. However, according to some example embodiments, three outer layers may be used as provided in the protective layer assembly 200.

Now referring to FIG. 2B, an alternative protective layer assembly 290 is shown. The protective layer assembly 290 may have the same six protective material layers 210, 220, 230, 240, 250, and 260, but may also include an inner liner 280 and an exterior shell layer 270. The protective layer assembly 290 is shown in relation to a user's skin 201, when the protective garment is worn, to provide context to the location of the layers relative to the user's skin 201. The inner liner 280 may be disposed closer to the user's skin 201 than the plurality of inner protective material layers when a protective garment comprising the protective layer assembly 290 is being worn. The inner liner 280 may be formed of a thin sheet of polyester, nylon, other breathable and/or soft fabric. The exterior shell layer 270 may be disposed further from the user's skin 201 than the plurality of outer protective material layers when a protective garment comprising the protective layer assembly 290 is being worn. As such, the exterior shell layer 270 may be the most external layer of the protective layer assembly 290 and the garment that includes the protective layer assembly 290. The exterior shell layer 270 may be formed of a waterproof fabric, such as, for example nylon or other woven plastics. The exterior shell layer 270 may be tough and slippery so that it protects against trivial damage that may compromise the internal protective material layers. Knee patches comprising an abrasion resistant material such as a para-aramid (e.g. Kevlar^{®}) cloth may embody or be sewn to the exterior shell layer 270 to protect the garment against wear and tear.

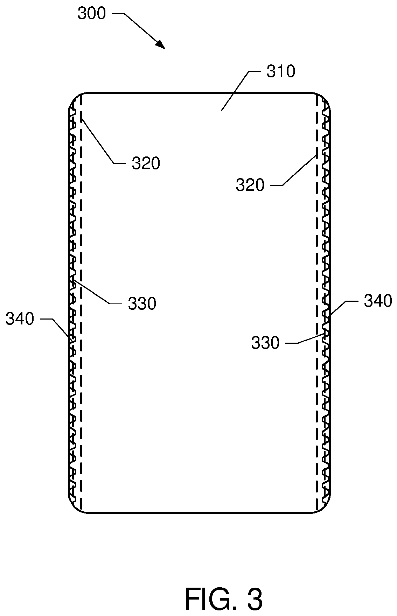

Now referring to FIG. 3, a stitched protective layer assembly 300 is shown. The stitched protective layer assembly 300 may comprise a protective layer assembly 310, which may be, for example, the protective layer assembly 200 or the protective layer assembly 290. The protective layer assembly 310 of the stitched protective layer assembly 300 may be stitched together and may be stitched into a given garment. According to some example embodiments, the stitched protective layer assembly 300 may form a panel, such as a front panel of protective pants.

The layers and adjacent material (e.g., of another panel of the garment) may be stitched together to maintain the layers in a relative position to affix the stitched protective layer assembly 300 and form the garment. In this regard, stitching may be present around a perimeter of the stitched protective layer assembly 300 (although stitching is only shown on the sides of the stitched protective layer assembly 300 in FIG. 3). On each side a first stitch 320, a second stitch 330, and an overlock stitch 340. The visible layer may be an inner liner (which maybe the same or similar to the inner liner 280). Although not visible in FIG. 3, it is understood that behind the liner layer, a stack of protective material layers is present that is the same or similar in construction with the protective layer assembly 200 or the protective layer assembly 290.

According to some example embodiments, the first stitch 320, which may be farthest from an edge of the stitched protective layer assembly 300, may be a seam stitch, such as, for example, an ISO 4916 1.01.02 or an ISO 4916 1.01.03 stitch. The first stitch 320 may run a length of the panel formed by the stitched protective layer assembly 300. According to some example embodiments, the second stitch 330, which may be closer to an edge of the stitched protective layer assembly 300 than the first stitch, may also be a seam stitch, such as, for example, an ISO 4916 1.01.02 or an ISO 4916 1.01.03. The second stitch 330 may also run a length of the panel formed by the stitched protective layer assembly 300. Additionally, according to some example embodiments, the overlock stitch 340, which may be on an edge of the stitched protective layer assembly 300, may be an overlock stitch such as, for example, an ISO 4915 401 and 504 stitching, an ISO 4915 501 stitch, or an ISO 4915 301 stitch. The overlock stitch 340 may also run a length of the panel formed by the stitched protective layer assembly 300.

Having described the layering and stitching that may be utilized according to some example embodiments, the following will describe some example protective garments that may be constructed with the protective layer assemblies and stitched protective layer assemblies described herein. While the protective garments shown in the following figures are directed to leg protection, it is understood that the material layer assemblies described herein may be utilized for torso, arm, hand, and head protection as well.

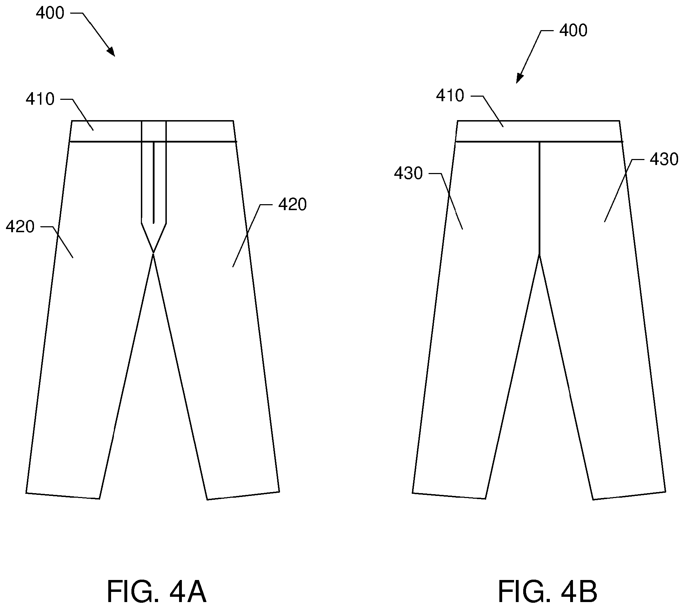

As such, FIGs. 4A and 4B illustrate an example embodiment of protective pants 400 that include a protective layer assembly as described herein. FIG. 4A is a front view of the protective pants 400 and FIG. 4B is a back view of the protective pants 400. With reference to the front view of FIG. 4A, the protective pants 400 may include a waistband 410 and front leg panels 420 (or front panels). The front leg panels 420 may be stitched to the waistband 410 and to crotch or central region of the protective pants 400. The front leg panels 420 may be a common region where accidental chainsaw contact can occur, and therefore a protective layer assembly, such as the protective layer assemblies 200 or 290 may be included to form the front leg panels 420. According to some example embodiments, the front leg panels 420 may run from the waistband 410 to an ankle of the user and a protective layer assembly may be extend in the same manner.

Now referring to FIG. 4B and the back view of the protective pants 400, again the waistband 410 may be seen that is connected or stitched to back leg panels 430 (or back panels). The back leg panels 430 may extend from the waistband 410 to the ankle of the user. The back leg panels 430 may be stitched to each other along a rear seam and stitched to the front leg panels 420 at an outer seam. While accidental contact with the chainsaw may not happen as frequently on the back side of an individual, back side contacts can still occur and therefore the back leg panels 430 may also be constructed using a protective layer assembly, such as, protective layer assembly 200 or 290, as described herein. According to some example embodiments, because accidental chainsaw contacts occur with more frequency near the ankles of the individual, a protective layer assembly as described herein may be employed at least in the ankle region of the back leg panels 430.

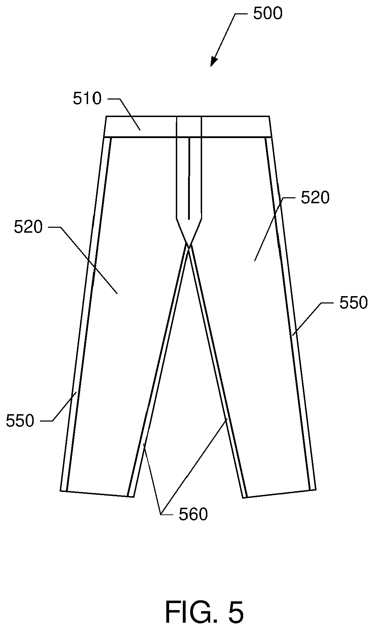

FIG. 5 illustrates another example embodiment of protective pants 500 that includes a protective layer assembly as described herein. FIG. 5 is a front view of the protective pants 500, which may include a waistband 510, front leg panels 520, outer seam panels 550, and inner seam panels 560. The front leg panels 520 (or front panels) may be stitched to the waistband 510 and to crotch or central region of the protective pants 500. The front leg panels 520 may also be stitched to the outer seam panels 550 and the inner seam panels 560. The outer seam panels 550 and the inner seam panels 560 may be formed to permit alternative fabric movements when a user is positioned in different working positions. According to some example embodiments, the outer seam panels 550 and the inner seam panels 560 may allow for the front leg panels 420 to rest more evenly in different working positions of the user to limit tension regions and increase protection. According to some example embodiments, the outer seam panels 550 and the inner seam panels 560 may include bunching at certain location or be more flexible (e.g., include elastic). Similar to the front leg panels 420, the front leg panels 520 may be a common region where accidental chainsaw contact can occur, and therefore a protective layer assembly, such as the protective layer assemblies 200 or 290 may be included to form the front leg panels 520. According to some example embodiments, the front leg panels 520 may run from the waistband 510 to an ankle of the user and a protective layer assembly may be extend in the same manner.

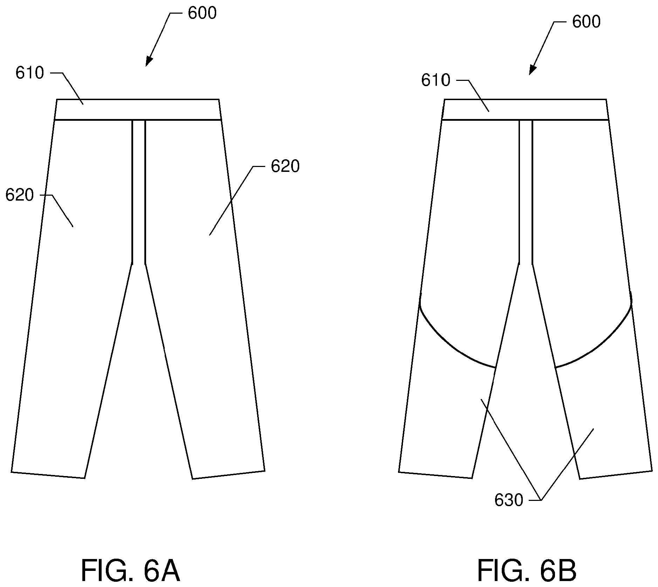

FIGs. 6A and 6B illustrate an example, not forming part of the claimed invention, of protective chaps 600 that include a protective layer assembly as described herein. FIG. 6A is a front view of the protective chaps 600 and FIG. 6B is a back view of the protective chaps 600. With reference to the front view of FIG. 6A, the protective chaps 600 may include a waistband 610 and front leg panels 620 (or front panels). The front leg panels 620 may be stitched to the waistband 610. According to some example embodiments, the front leg panels 620 may, but need not, be connected at the crotch or central region of the protective chaps 600. Although not shown, the protective chaps 600 may include straps or other affixing means on the front leg panels 620 to secure the front leg panels 620 of the protective chaps 600 to the user's legs. The front leg panels 620 may be a common region where accidental chainsaw contact can occur, and therefore a protective layer assembly, such as the protective layer assemblies 200 or 290 may be included to form the front leg panels 620. According to some example embodiments, the front leg panels 620 may run from the waistband 610 to an ankle of the user and a protective layer assembly may be extend in the same manner.

Now referring to FIG. 6B and the back view of the protective chaps 600, again the waistband 610, which may wrap around the waist of the user, may be seen and the back side of the front leg panels 620. Because accidental chainsaw contacts occur with more frequency near the ankles of the individual, a protective layer assembly (e.g., protective layer assembly 200 or 290) as described herein. may be employed in the ankle region as back leg panels 630. The back leg panels 630 may extend from about the knee of the user to the ankle. The back leg panels 630 may be stitched to the front leg panels 620 to provide continuous protection around the lower portion of the leg. In this regard, according to some example embodiments, the back leg panels 630 may be wrapped around the lower leg and secured to the front leg panels 620 on the inner seam sides.

According to various example embodiments, "pants" are to be construed as any garment comprising portions that separately enclose at least a substantial part of the legs of the wearer and are united at a crotch, i.e. a joint between the legs that faces downwardly in the standing position of the wearer. "Chaps" are to be construed as a garment comprising portions that separately cover at least a substantial part of the legs of the wearer.

Some additional example embodiments will now be described. According to some example embodiments, a protective garment for use with a chainsaw is provided. The protective garment may comprise a plurality of inner protective material layers and a plurality of outer protective material layers. Each inner protective material layer may have first pull-out fibers configured to pull out when contacted by a moving chainsaw. The first pull-out fibers may be weaved into each of the inner protective material layers with a first fiber density. Each outer protective material layer may have second pull-out fibers configured to pull out when contacted by a moving chainsaw. The second pull-out fibers may be weaved into each of the outer protective material layers with a second fiber density. The second fiber density is greater than the first fiber density. The plurality of inner protective material layers may be disposed closer to a user's skin when the protective garment is being worn than the plurality of outer protective material layers.

According to some example embodiments, the protective garment may further comprise an inner liner disposed closer to the user's skin when the protective garment is being worn than the plurality of inner protective material layers. Additionally or alternatively, according to some example embodiments, the protective garment may further comprise an exterior shell layer disposed farther from the user's skin when the protective garment is being worn than the plurality of outer protective material layers. Additionally or alternatively, according to some example embodiments, the protective garment may be pants or trousers. Alternatively, the protective garment may be a jacket, shirt, sleeves, or the like.

Additionally or alternatively, the plurality of inner protective material layers may consist of three inner protective material layers, and/or the plurality of outer protective material layers may consist of three outer protective material layers. In this regard, according to some example embodiments, the protective garment may have less than six layers of fabric or less than eight layers of fabric. Additionally or alternatively, the first fiber density may be defined by a first warp range, i.e. number of warp threads per centimeter, of about 4 to 5 threads per centimeter (threads/cm) and/or a weft range, i.e. number of weft threads per centimeter, of about 3 to 4 threads/cm. Such ranges may result in a particular attractive balance between protection and flexibility of the protective garment. Alternatively or additionally, the second fiber density may be defined by a second warp range of about 4 to 5 threads/cm and/or a second weft range of about 7 to 8 threads/cm. Again, such ranges may result in a particular attractive balance between protection and flexibility of the protective garment. Additionally or alternatively, according to some example embodiments, the first pull-out fibers may comprise polyester and ultra-high-molecular-weight polyethylene, and/or the second pull-out fibers comprise polyester. Additionally or alternatively, according to some example embodiments, each of inner protective material layers has a surface density, i.e. weight per unit area, of about 95 ± 5 grams per meter squared (g/m2), and/or each of outer protective material layers has a surface density, i.e. weight per unit area, of about 130 ± 5 g/m2. According to some example embodiments, the plurality of inner protective material layers and the plurality of outer protective material layers may be stitched together via an ISO 4916 stitch or an ISO 4515 stitch with an overlock stitch.

According to some example embodiments, a front panel of a protective garment for use with a chainsaw is provided. The front panel may be a component of a garment that can be under compression by straps of a climbing harness or climbing spurs. The front panel may comprise a plurality of inner protective material layers and a plurality of outer protective material layers. Each inner protective material layer may have first pull-out fibers configured to pull out when contacted by a moving chainsaw. The first pull-out fibers may be weaved into each of the inner protective material layers with a first fiber density. Each outer protective material layer may have second pull-out fibers configured to pull out when contacted by a moving chainsaw. The second pull-out fibers may be weaved into each of the outer protective material layers with a second fiber density. The second fiber density is greater than the first fiber density. The plurality of inner protective material layers may be disposed closer to a user's skin when the protective garment is being worn than the plurality of outer protective material layers.

According to some example embodiments, the front panel of the protective garment may further comprise an inner liner disposed closer to the user's skin when the protective garment is being worn than the plurality of inner protective material layers. Additionally or alternatively, according to some example embodiments, the front panel of the protective garment may further comprise an exterior shell layer disposed farther from the user's skin when the protective garment is being worn than the plurality of outer protective material layers. Additionally or alternatively, according to some example embodiments, the protective garment may be pants or trousers. Alternatively, the protective garment may be chaps. Alternatively, the protective garment may be a jacket, shirt, sleeves, or the like.

Additionally or alternatively, the plurality of inner protective material layers may consist of three inner protective material layers, and/or the plurality of outer protective material layers may consist of three outer protective material layers. In this regard, according to some example embodiments, the front panel of the protective garment may have less than six layers of fabric or less than eight layers of fabric. Additionally or alternatively, the first fiber density may be defined by a first warp range of about 4 to 5 threads per centimeter (threads/cm) and/or a weft range of about 3 to 4 threads/cm. Such ranges may result in a particular attractive balance between protection and flexibility of the front panel. Alternatively or additionally, the second fiber density may be defined by a second warp range of about 4 to 5 threads/cm and/or a second weft range of about 7 to 8 threads/cm. Such ranges may result in a particular attractive balance between protection and flexibility of the protective garment. Additionally or alternatively, according to some example embodiments, the first pull-out fibers may comprise polyester and ultra-high-molecular-weight polyethylene, and/or the second pull-out fibers comprise polyester. Additionally or alternatively, according to some example embodiments, each of inner protective material layers has a surface density, i.e. weight per unit area, of about 95 ± 5 grams per meter squared (g/m2) and/or each of outer protective material layers has a surface density of about 130 ± 5 g/m2. According to some example embodiments, the plurality of inner protective material layers and the plurality of outer protective material layers may be stitched together via an ISO 4916 stitch or an ISO 4515 stitch with an overlock stitch.

Many modifications and other embodiments of the inventions set forth herein will come to mind to one skilled in the art to which these inventions, which are solely defined by the claims, pertain having the benefit of the teachings presented in the foregoing descriptions and the associated drawings.

## Claims

1. A protective garment (400, 500, 600) for use with a chainsaw, the protective garment comprising:
a plurality of inner protective material layers (210, 220, 230), each inner protective material layer (210, 220, 230) having first pull-out fibers (215) configured to pull out when contacted by a moving chainsaw, wherein the first pull-out fibers (215) are weaved into each of the inner protective material layers with a first fiber density; and
a plurality of outer protective material layers (240, 250, 260), each outer protective material layer (240, 250, 260) having second pull-out fibers (245) configured to pull out when contacted by a moving chainsaw, wherein the second pull-out fibers (245) are weaved into each of the outer protective material layers (240, 250, 260) with a second fiber density;
wherein the plurality of inner protective material layers (210, 220, 230) are disposed closer to a user's skin (201) when the protective garment (400, 500, 600) is being worn than the plurality of outer protective material layers (240, 250, 260);
**characterized in that** the second fiber density is greater than the first fiber density.

2. The protective garment (400, 500, 600) of claim 1 further comprising an inner liner (280) disposed closer to the user's skin (201) when the protective garment (400, 500, 600) is being worn than the plurality of inner protective material layers (210, 220, 230).

3. The protective garment (400, 500, 600) of any of the preceding claims, further comprising an exterior shell layer (270) disposed farther from the user's skin (201) when the protective garment (400, 500, 600) is being worn than the plurality of outer protective material layers (240, 250, 260).

4. The protective garment (400, 500) of any of the preceding claims, wherein the protective garment (400, 500) is pants or trousers (400, 500).

5. A front panel (420, 520, 620) of a protective garment (400, 500, 600) for protection associated with the use of a chainsaw while the protective garment (400, 500, 600) is under compression by straps of a climbing harness (110) or climbing spurs (120), the front panel (420, 520, 620) comprising:
a plurality of inner protective material layers (210, 220, 230), each inner protective material layer (210, 220, 230) having first pull-out fibers (215) configured to pull out when contacted by a moving chainsaw, wherein the first pull-out fibers (215) are weaved into each of the inner protective material layers (210, 220, 230) with a first fiber density; and
a plurality of outer protective material layers (240, 250, 260), each outer protective material layer (240, 250, 260) having second pull-out fibers (245) configured to pull out when contacted by a moving chainsaw, wherein the second pull-out fibers (245) are weaved into each of the outer protective material layers (240, 250, 260) with a second fiber density;
wherein the plurality of inner protective material layers (210, 220, 230) are disposed closer to a user's skin (201) when the protective garment is being worn than the plurality of outer protective material layers (240, 250, 260);
**characterized in that** the second fiber density is greater than the first fiber density.

6. The front panel (420, 520, 620) of the protective garment (400, 500, 600) of claim 5 further comprising an inner liner (270) disposed closer to the user's skin (201) when the protective garment (400, 500, 600) is being worn than the plurality of inner protective material layers (210, 220, 230).

7. The front panel (420, 520, 620) of the protective garment (400, 500, 600) of any of the claims 5 - 6 further comprising an exterior shell layer (270) disposed farther from the user's skin (201) when the protective garment (400, 500, 600) is being worn than the plurality of outer protective material layers (240, 250, 260).

8. The front panel (420, 520) of the protective garment (400, 500) of any of the claims 5 - 7, wherein the protective garment (400, 500) is pants or trousers (400, 500).

9. The front panel (420, 520, 620) of the protective garment (400, 500, 600) of any of the claims 5 - 8, wherein the plurality of inner protective material layers (210, 220, 230) consists of three inner protective material layers (210, 220, 230), and/or the plurality of outer protective material layers (240, 250, 260) consists of three outer protective material layers (240, 250, 260).

10. The protective garment (400, 500, 600) of any of the claims 1 - 4 or the front panel (420, 520, 620) of the protective garment (400, 500, 600) of any of the claims 5 - 9, wherein the first pull-out fibers (215) comprise polyester and ultra-high-molecular-weight polyethylene, and/or
wherein the second pull-out fibers (245) comprise polyester.

11. The protective garment (400, 500, 600) of any of the claims 1 - 4 or 10 or the front panel (420, 520, 620) of the protective garment (400, 500, 600) of any of the claims 5 - 10, wherein the plurality of inner protective material layers (210, 220, 230) and the plurality of outer protective material layers (240, 250, 260) are stitched together via an ISO 4916 stitch (320, 330) or an ISO 4915 overlock stitch (340).

12. The protective garment (400, 500, 600) of any of the claims 1 - 4 or 10 - 11 or the front panel (420, 520, 620) of the protective garment (400, 500, 600) of any of the claims 5 - 11, wherein each of said inner protective material layers (210, 220, 230) has a first surface density, and each of said outer protective material layers (240, 250, 260) has a second surface density, wherein the second surface density is higher than the first surface density.

13. The protective garment (400, 500, 600) of any of the claims 1 - 4 or 10 - 12 or the front panel (420, 520, 620) of the protective garment (400, 500, 600) of any of the claims 5 - 12, wherein said inner protective material layers (210, 220, 230) have a first thread count, and said outer protective material layers (240, 250, 260) have a second thread count, wherein the second thread count is higher than the first thread count.

14. The protective garment (400, 500, 600) of any of the claims 1 - 4 or 10 - 13 or the front panel (420, 520, 620) of the protective garment (400, 500, 600) of any of the claims 5 - 13, wherein the first and/or second pull-out fibers are configured as unspun yarns or rovings of fiber weaved into the respective inner and/or outer protective material layers (210, 220, 230; 240, 250, 260).

## Patentansprüche

1. Schutzkleidungsstück (400, 500, 600) zur Verwendung mit einer Kettensäge, wobei das Schutzkleidungsstück umfasst:
eine Vielzahl von inneren Schutzmaterialschichten (210, 220, 230), wobei jede innere Schutzmaterialschicht (210, 220, 230) erste Auszugsfasern (215) aufweist, die dafür gestaltet sind, ausgezogen zu werden, wenn sie in Kontakt einer sich bewegenden Kettensäge kommen, wobei die ersten Auszugsfasern (215) in jede der inneren Schutzmaterialschichten mit einer ersten Faserdichte eingewebt sind; und
eine Vielzahl von äußeren Schutzmaterialschichten (240, 250, 260), wobei jede äußere Schutzmaterialschicht (240, 250, 260) zweite Auszugsfasern (245) aufweist, die dafür gestaltet sind, ausgezogen zu werden, wenn sie in Kontakt einer sich bewegenden Kettensäge kommen, wobei die zweiten Auszugsfasern (245) in jede der äußeren Schutzmaterialschichten (240, 250, 260) mit einer zweiten Faserdichte eingewebt sind;
wobei die Vielzahl von inneren Schutzmaterialschichten (210, 220, 230) näher an der Haut (201) eines Benutzers angeordnet sind, wenn das Schutzkleidungsstück (400, 500, 600) getragen wird, als die Vielzahl von äußeren Schutzmaterialschichten (240, 250, 260);
**dadurch gekennzeichnet, dass** die zweite Faserdichte größer als die erste Faserdichte ist.

2. Schutzkleidungsstück (400, 500, 600) nach Anspruch 1, ferner umfassend eine Innenauskleidung (280), die näher an der Haut (201) des Benutzers angeordnet ist, wenn das Schutzkleidungsstück (400, 500, 600) getragen wird, als die Vielzahl von inneren Schutzmaterialschichten (210, 220, 230).

3. Schutzkleidungsstück (400, 500, 600) nach einem der vorstehenden Ansprüche, ferner umfassend eine äußere Mantelschicht (270), die weiter von der Haut (201) des Benutzers entfernt angeordnet ist, wenn das Schutzkleidungsstück (400, 500, 600) getragen wird, als die Vielzahl von äußeren Schutzmaterialschichten (240, 250, 260).

4. Schutzkleidungsstück (400, 500) nach einem der vorstehenden Ansprüche, wobei das Schutzkleidungsstück (400, 500) eine Hose oder lange Hose (400, 500) ist.

5. Vorderteil (420, 520, 620) eines Schutzkleidungsstücks (400, 500, 600) zum Schutz in Verbindung mit der Verwendung einer Kettensäge, wobei das Schutzkleidungsstück (400, 500, 600) unter Kompression durch durch Gurte eines Klettergurts (110) oder Steigeisens (120) steht, wobei die Vorderseite (420, 520, 620) umfasst:
eine Vielzahl von inneren Schutzmaterialschichten (210, 220, 230), wobei jede innere Schutzmaterialschicht (210, 220, 230) erste Auszugsfasern (215) aufweist, die dafür gestaltet sind, ausgezogen zu werden, wenn sie in Kontakt einer sich bewegenden Kettensäge kommen, wobei die ersten Auszugsfasern (215) in jede der inneren Schutzmaterialschichten (210, 220, 230) mit einer ersten Faserdichte eingewebt sind; und
eine Vielzahl von äußeren Schutzmaterialschichten (240, 250, 260), wobei jede äußere Schutzmaterialschicht (240, 250, 260) zweite Auszugsfasern (245) aufweist, die dafür gestaltet sind, ausgezogen zu werden, wenn sie in Kontakt einer sich bewegenden Kettensäge kommen, wobei die zweiten Auszugsfasern (245) in jede der äußeren Schutzmaterialschichten (240, 250, 260) mit einer zweiten Faserdichte eingewebt sind;
wobei die Vielzahl von inneren Schutzmaterialschichten (210, 220, 230) näher an der Haut (201) eines Benutzers angeordnet sind, wenn das Schutzkleidungsstück getragen wird, als die Vielzahl von äußeren Schutzmaterialschichten (240, 250, 260);
**dadurch gekennzeichnet, dass** die zweite Faserdichte größer als die erste Faserdichte ist.

6. Vorderteil (420, 520, 620) des Schutzkleidungsstücks (400, 500, 600) nach Anspruch 5, ferner umfassend eine Innenauskleidung (270), die näher an der Haut (201) des Benutzers angeordnet ist, wenn das Schutzkleidungsstück (400, 500, 600) getragen wird, als die Vielzahl von inneren Schutzmaterialschichten (210, 220, 230).

7. Vorderteil (420, 520, 620) des Schutzkleidungsstücks (400, 500, 600) nach einem der Ansprüche 5-6, ferner umfassend eine äußere Mantelschicht (270), die weiter von der Haut (201) des Benutzers entfernt angeordnet ist, wenn das Schutzkleidungsstück (400, 500, 600) getragen wird, als die Vielzahl von äußeren Schutzmaterialschichten (240, 250, 260).

8. Vorderteil (420, 520) des Schutzkleidungsstücks (400, 500) nach einem der Ansprüche 5-7, wobei das Schutzkleidungsstück (400, 500) eine Hose oder lange Hose (400, 500) ist.

9. Vorderteil (420, 520, 620) des Schutzkleidungsstücks (400, 500, 600) nach einem der Ansprüche 5-8, wobei die Vielzahl von inneren Schutzmaterialschichten (210, 220, 230) aus drei inneren Schutzmaterialschichten (210, 220, 230) besteht und/oder die Vielzahl von äußeren Schutzmaterialschichten (240, 250, 260) aus drei äußeren Schutzmaterialschichten (240, 250, 260) besteht.

10. Schutzkleidungsstück (400, 500, 600) nach einem der Ansprüche 1-4 oder Vorderteil (420, 520, 620) des Schutzkleidungsstücks (400, 500, 600) nach einem der Ansprüche 5-9, wobei die ersten Auszugsfasern (215) Polyester und Polyethylen mit ultrahohem Molekulargewicht umfassen, und/oder
wobei die zweiten Auszugsfasern (245) Polyester umfassen.

11. Schutzkleidungsstück (400, 500, 600) nach einem der Ansprüche 1-4 oder 10 oder Vorderteil (420, 520, 620) des Schutzkleidungsstücks (400, 500, 600) nach einem der Ansprüche 5-10, wobei die Vielzahl von inneren Schutzmaterialschichten (210, 220, 230 340) und die Vielzahl von äußeren Schutzmaterialschichten (240, 250, 260) über eine ISO 4916-Naht (320, 330) oder eine ISO-Overlocknaht (4915) miteinander vernäht sind.

12. Schutzkleidungsstück (400, 500, 600) nach einem der Ansprüche 1-4 oder 10-11 oder Vorderteil (420, 520, 620) des Schutzkleidungsstücks (400, 500, 600) nach einem der Ansprüche 5-11, wobei jede der inneren Schutzmaterialschichten (210, 220, 230) eine erste Flächendichte aufweist und jede der äußeren Schutzmaterialschichten (240, 250, 260) eine zweite Flächendichte aufweist, wobei die zweite Flächendichte höher als die erste Flächendichte ist.

13. Schutzkleidungsstück (400, 500, 600) nach einem der Ansprüche 1-4 oder 10-12 oder Vorderteil (420, 520, 620) des Schutzkleidungsstücks (400, 500, 600) nach einem der Ansprüche 5-12, wobei die inneren Schutzmaterialschichten (210, 220, 230) eine erste Fadenzahl aufweisen und die äußeren Schutzmaterialschichten (240, 250, 260) eine zweite Fadenzahl aufweisen, wobei die zweite Fadenzahl höher als die erste Fadenzahl ist.

14. Schutzkleidungsstück (400, 500, 600) nach einem der Ansprüche 1-4 oder 10-13 oder Vorderteil (420, 520, 620) des Schutzkleidungsstücks (400, 500, 600) nach einem der Ansprüche 5-13, wobei die erste und/oder die zweite Auszugsfaser als ungesponnene Garne oder Faserrovings gestaltet sind, die in die jeweilige innere und/oder äußere Schutzmaterialschicht (210, 220, 230; 240, 250, 260) eingewebt sind.

## Revendications

1. Vêtement de protection (400, 500, 600) destiné à être utilisé avec une tronçonneuse, le vêtement de protection comprenant :
une pluralité de couches de matériau de protection interne (210, 220, 230), chaque couche de matériau de protection interne (210, 220, 230) ayant des premières fibres d'extraction (215) configurées pour sortir lorsqu'elles sont mises en contact avec une tronçonneuse mobile, les premières fibres d'extraction (215) étant tissées dans chacune des couches de matériau de protection interne avec une première densité de fibres ; et
une pluralité de couches de matériau de protection externe (240, 250, 260), chaque couche de matériau de protection externe (240, 250, 260) ayant des secondes fibres d'extraction (245) configurées pour sortir lorsqu'elles sont mises en contact avec une tronçonneuse mobile, les secondes fibres d'extraction (245) étant tissées dans chacune des couches de matériau de protection externe (240, 250, 260) avec une seconde densité de fibres ;
la pluralité de couches de matériau de protection interne (210, 220, 230) étant disposées plus près de la peau d'un utilisateur (201) lorsque le vêtement de protection (400, 500, 600) est porté que la pluralité de couches de matériau de protection externe (240, 250, 260) ;
**caractérisé en ce que** la seconde densité de fibre est supérieure à la première densité de fibre.

2. Vêtement de protection (400, 500, 600) selon la revendication 1, comprenant en outre une doublure intérieure (280) disposée plus près de la peau de l'utilisateur (201) lorsque le vêtement de protection (400, 500, 600) est porté que la pluralité de couches de matériau de protection interne (210, 220, 230).

3. Vêtement de protection (400, 500, 600) selon l'une quelconque des revendications précédentes, comprenant en outre une couche de coque extérieure (270) disposée plus loin de la peau de l'utilisateur (201) lorsque le vêtement de protection (400, 500, 600) est porté que la pluralité de couches de matériau de protection externe (240, 250, 260).

4. Vêtement de protection (400, 500) selon l'une quelconque des revendications précédentes, le vêtement de protection (400, 500) étant un pantalon (400, 500).

5. Panneau avant (420, 520, 620) d'un vêtement de protection (400, 500, 600) lié à l'utilisation d'une tronçonneuse alors que le vêtement de protection (400, 500, 600) est sous compression par des sangles d'un harnais d'escalade (110) ou d'ergots d'escalade (120), le panneau avant (420, 520, 620) comprenant :
une pluralité de couches de matériau de protection interne (210, 220, 230), chaque couche de matériau de protection interne (210, 220, 230) ayant des premières fibres d'extraction (215) configurées pour sortir lorsqu'elles sont mises en contact avec une tronçonneuse mobile, les premières fibres d'extraction (215) étant tissées dans chacune des couches de matériau de protection interne (210, 220, 230) avec une première densité de fibres ; et
une pluralité de couches de matériau de protection externe (240, 250, 260), chaque couche de matériau de protection externe (240, 250, 260) ayant des secondes fibres d'extraction (245) configurées pour sortir lorsqu'elles sont mises en contact avec une tronçonneuse mobile, les secondes fibres d'extraction (245) étant tissées dans chacune des couches de matériau de protection externe (240, 250, 260) avec une seconde densité de fibres ;
la pluralité de couches de matériau de protection interne (210, 220, 230) étant disposées plus près de la peau d'un utilisateur (201) lorsque le vêtement de protection est porté que la pluralité de couches de matériau de protection externe (240, 250, 260) ;
**caractérisé en ce que** la seconde densité de fibre est supérieure à la première densité de fibre.

6. Panneau avant (420, 520, 620) du vêtement de protection (400, 500, 600) selon la revendication 5, comprenant en outre une doublure intérieure (270) disposée plus près de la peau de l'utilisateur (201) lorsque le vêtement de protection (400, 500, 600) est porté que la pluralité de couches de matériau de protection interne (210, 220, 230).

7. Panneau avant (420, 520, 620) du vêtement de protection (400, 500, 600) selon l'une quelconque des revendications 5 et 6, comprenant en outre une couche de coque extérieure (270) disposée plus loin de la peau de l'utilisateur (201) lorsque le vêtement de protection (400, 500, 600) est porté que la pluralité de couches de matériau de protection externe (240, 250, 260).

8. Panneau avant (420, 520) du vêtement de protection (400, 500) selon l'une quelconque des revendications 5 à 7, le vêtement de protection (400, 500) étant un pantalon (400, 500).

9. Panneau avant (420, 520, 620) du vêtement de protection (400, 500, 600) selon l'une quelconque des revendications 5 à 8, la pluralité de couches de matériau de protection interne (210, 220, 230) étant constituée de trois couches de matériau de protection interne (210, 220, 230) et/ou la pluralité de couches de matériau de protection externe (240, 250, 260) étant constituée de trois couches de matériau de protection externe (240, 250, 260).

10. Vêtement de protection (400, 500, 600) selon l'une quelconque des revendications 1 à 4 ou panneau frontal (420, 520, 620) du vêtement de protection (400, 500, 600) selon l'une quelconque des revendications 5 à 9, les premières fibres d'extraction (215) comprenant du polyester et du polyéthylène de poids moléculaire ultra élevé, et/ou
les deuxièmes fibres d'extraction (245) comprenant du polyester.

11. Vêtement de protection (400, 500, 600) selon l'une quelconque des revendications 1 à 4 ou 10 ou panneau avant (420, 520, 620) du vêtement de protection (400, 500, 600) selon l'une quelconque des revendications 5 à 10, la pluralité de couches de matériau de protection interne (210, 220, 230) et la pluralité de couches de matériau de protection externe (240, 250, 260) étant cousues ensemble par l'intermédiaire d'un point ISO 4916 (320, 330) ou d'un point de recouvrement ISO 4915 (340).

12. Vêtement de protection (400, 500, 600) selon l'une quelconque des revendications 1 à 4 ou 10 à 11 ou panneau avant (420, 520, 620) du vêtement de protection (400, 500, 600) selon l'une quelconque des revendications 5 à 11, chacune desdites couches de matériau de protection interne (210, 220, 230) ayant une première densité de surface, et chacune desdites couches de matériau de protection externe (240, 250, 260) ayant une seconde densité de surface, la seconde densité de surface étant supérieure à la première densité de surface.

13. Vêtement de protection (400, 500, 600) selon l'une quelconque des revendications 1 à 4 ou 10 à 12 ou panneau avant (420, 520, 620) du vêtement de protection (400, 500, 600) selon l'une quelconque des revendications 5 à 12, lesdites couches de matériau de protection interne (210, 220, 230) ayant un premier nombre de fils, et lesdites couches de matériau de protection externe (240, 250, 260) ayant un second nombre de fils, le second nombre de fils étant supérieur au premier nombre de fils.

14. Vêtement de protection (400, 500, 600) selon l'une quelconque des revendications 1 à 4 ou 10 à 13 ou panneau avant (420, 520, 620) du vêtement de protection (400, 500, 600) selon l'une quelconque des revendications 5 à 13, les première et/ou seconde fibres d'extraction étant configurées comme des fils non filés ou des mèches de fibres tissées dans les couches de matériau de protection interne et/ou externe respectives (210, 220, 230 ; 240, 250, 260).
